# EUROPEAN PATENT APPLICATION

(11) **EP 0 964 467 A2**
(43) Date of publication of application: **15.12.1999**
(21) Application number: 99106599.6
(22) Date of filing: 31.03.1999
(51) Int. Cl.: H01M 10/36, H01M 4/50, H01M 4/62

(54) **Manganese dioxide/zinc rechargeable cell with improved capacity and reversibility**

(30) Priority: 10.06.1998 KR 2141398
(71) Applicant: Finecell CO. LTD., Sungnam-City, Kyung ki-Do 463-070 (KR); Kim, Sa-Heum, Kunpo-City - Kyung ki-Do (KR)
(72) Inventor: Oh, Seung-Mo, Tongan-ku, Ahanyang-City, Kyung ki-Do (KR); Kim, Sa-Heum, Kunpo-City, Kyung ki-Do (KR)
(74) Representative: Gervasi, Gemma, Dr.

(57) **Abstract**

The present invention is directed to a rechargeable cell having an excellent capacity and reversibility, comprising a mixture of manganese dioxide and electrically conducting material as the cathode material, zinc or a zinc alloy as the anode material and an aqueous zinc sulphate solution a 0.5 M to 3 M as the electrolyte, further comprising a manganese (II) salt added to at least one of the said cathode material, anode material or electrolyte, and carbon powder added to said anode.

## Description

### Field of the Invention

The present invention relates to a rechargeable cell comprising manganese dioxide as a cathode material, zinc as an anode material and aqueous zinc sulphate solution as an electrolyte, further comprising an appropriate amount of a manganese (II) salt and carbon powder, said cell being able to inhibit the decrease in cell capacity resulting from the repeated charge/discharge cycles.

### Prior art

The alkaline manganese dioxide-zinc cells are the most widely used systems in the primary cell market. It is expected that their usage will increase thanks to their good reliability. Namely, they can be easily discharged at a high rate and show stable discharging performances: moreover, they do not cause serious environmental problems and utilise comparatively inexpensive and abundant materials. In particular, manganese dioxide has advantages in that it is inexpensive and does not cause severe environmental problems. Zinc also has advantages in that it is inexpensive and has great energy density in aqueous solution. Therefore, the study and commercialisation of manganese dioxide-zinc primary cells with such advantages has become the object of concern for a long time.

In this context, the manganese dioxide-aqueous zinc solution cell system has been one of the most widely used primary cell systems up to now. It has been provided in the form of Le Clanche cell, zinc chloride (heavy-duty) cell and alkaline cell. These cells utilise almost the same electrochemical reactions, but there are several differences in the methods for producing manganese dioxide and zinc, purity, additives and the composition of each electrolyte.

The recent trends towards miniaturisation, lightweight, higher performance, portability, and personal use of electronic and electric apparatuses have brought about an increased demand for rechargeable cells, that are cheap and suitable for long term use. The necessity of the development and production of rechargeable cells derives from the need to replace the demand for primary cells, which are discarded once discharged, thus cuffing down the related serious energy loss and environmental problems. Namely, the energy needed for the production of primary cells is more than ten times larger than the energy obtainable from the energy produced, and the use of rechargeable cells reduces such energy waste. In addition, the development of rechargeable cells can bring various kinds of advantages in view of the fact that the primary cells are wasteful, besides environmental problems associated with their use.

Based on various advantageous points of view, research and development of rechargeable cells has been conducted primarily on nickel-cadmium cells, nickel-hydrogen cells and alkaline manganese dioxide-zinc cells. In particular, it is estimated that alkaline rechargeable cells employing zinc as the anode material and manganese dioxide as the cathode material have the aforementioned advantages of high energy density and low costs. Furthermore, it is expected that the demand for the alkaline rechargeable cells will increase as the use of toxic lead-acid and nickel-cadmium cells become restricted.

Accordingly, many attempts to develop rechargeable cells with sufficient reversibility and high energy density from such manganese dioxide-zinc cell systems have been conducted. However, no significant results have been accomplished yet, since there are critical problems which are the decline of reversibility of manganese dioxide, the corrosion and the dendritic growth of zinc.

The rechargeable cells employing zinc as the anode material show disadvantages, such as instability of the zinc anode material and a short life-cycle.

The main reason for deteriorating performances of the zinc electrode are its irregular dissolution during the discharging period and the uneven zinc deposition during the charging period in the course of the repeated charge/discharge cycles.

In other words, zinc is dissolved unevenly and irregularly during the discharging period because of minute differences in the surfaces of zinc electrodes. As a result, the zinc electrode surface will become rougher with the progress of the discharge, and the zinc electrode will come to be deformed. On the contrary, during the charging period, zinc deposits in a tree-branch form called dendrite.

The dendrite grows toward the cathode with the repeated charge/discharge cycles. The deposited zinc ultimately penetrates the separator to cause an internal short-circuit. Furthermore, with the repeated charge and discharge cycles, the polarisation from equilibrium potential of Zn/Zn(II) becomes more severe (increase of overpotential), causing the decomposition of the electrolyte, which in turn causes a gas generation and the electrolyte exhaustion. The zinc anode deformation and its dendritic growth, as well as the gas generation and the electrolyte exhaustion should be avoided, since they may extremely threaten the reversibility and stability not only of the zinc anode but also of the cell itself

In order to overcome the aforesaid drawbacks, the methods of using alloys between various kinds of metals and zinc, or adding a metal oxide to zinc, have been employed hitherto. In addition, the methods of adding many additives to electrolytes have also been developed (*J. Electrochem. Soc*., 138, 645 (1991)).

Such methods have the aim to provide the following effects :
i) the avoidance of the hydrogen generation,
ii) the avoidance of the zinc compound's dissolution,
iii) the formation of a rigid zinc electrode surface via electrodeposition together with zinc (i.e. the avoidance of dendritic growth),
iv) the formation of a metal surface having good electrical conductivity for the rigid electrodeposition of zinc,
v) the guiding out uniform current distribution,
vi) the improvement of wettability of the zinc electrode,
vii) the improvement of electronic conductivity of the zinc electrode,
viii) the decrease in mass transfer resulting from the formation of a complex with a water soluble zinc compound,
ix) the improvement of availability of the zinc electrode,
x) the maintenance of a porous structure for the zinc electrode.

In addition to the above mentioned problems relating to zinc electrodes, there is another restriction in the use of alkaline manganese dioxide/zinc cells, due to the irreversibility of manganese dioxide cathodes. For example, in order to obtain 100 or more cycles of charge/discharge performance, the discharge capacity should be restricted not to exceed 25% of the one-electron discharge theoretical capacity, since the product of one-electron discharge, MnOOH, loses its electrochemical activity. The possibility of recharging (oxidising) the manganese dioxide, having an almost utilised (deeply discharged) capacity, is limited to few initial cycles along with a drastic loss of capacity. The causes of this irreversibility can be explained in many ways, including the loss of surface conductivity, the increase of internal resistance of the reaction intermediate or product, and the production of Mn₂O₃, Mn₃O₄ or ZnO·Mn₂O₃. According to the McBreen's explanation (*Electrochim. Acta*, 7, 449 (1962)), the initial crystal lattice is broken down during the first-electron discharging period to produce amorphous MnOOH, which is then reduced to Mn(OH)₂ during the second-electron discharging period. This is accumulated in the form of irreversible Mn₃O₄ or ZnO·Mn₂O₃ during the charging period to cause the deterioration of the cell performance, which makes charging reaction impossible.

In view of the above drawbacks, many studies have been carried out to develop rechargeable counterparts and improve such cells as the Le Clanche cells or the zinc chloride cells or the alkaline rechargeable cells, for example by using a strong acidic electrolyte, but such attempts have not produced remarkable results up to now. In particular, there still exist problems such as corrosion, non-uniform dissolution and electrodeposition of zinc in the alkaline electrolyte, and internal short circuiting due to dendritic growth. In addition, there is a problem regarding the loss of reversibility in manganese dioxide, since the product of zinc corrosion reacts with manganese dioxide to form an irreversible hetaerolite (ZnO·Mn₂O₃).

As an electrolyte, several zinc salts have been used, such as ZnCl₂, ZnBr₂, Zn(O₂CCH₃)₂, Zn(NO₃)₂, Zn(ClO₄)₂ and ZnSO₄. Among them, zinc sulphate is the most preferred, because it comprises the sulphate anion that is preferred in the procedure of electrodeposition of zinc, and it is also employed in the process for producing electrolytic manganese dioxide. Zinc sulphate is moreover considered as a promising electrolyte, because it has high reversibility of electrochemical oxidation/reduction for MnO₂/Mn(II) and Zn/Zn(II). For this reason, although this electrolyte has electrical conductivity around 50 mS/cm at room temperature, which is rather smaller than that of alkaline electrolyte (>400 mS/cm), and although it gives problems of zinc corrosion, it has been developed as new electrolyte.

Shoji et al. report experiments carried out on new systems employing various kinds of manganese dioxide as the cathode materials and an aqueous zinc sulphate 2 M solution as an electrolyte (*Inorg. Chim. Acta*, 117, L27 (1986), *J. Appl. Electrochem*., 18, 521 (1988), *J. Electroanal. Chem*., 362, 153 (1993), Japan Patent Application No. 05166540), which show that there is still a margin to develop cells with improved reversibility and excellent capacity.

Yamamoto also reports similar results as Shoji et al. in the Japan Patent Application No. 06044975. Likewise, Askar et al. disclose experimental results concerning a cell employing an aqueous zinc sulphate 1 M solution as an electrolyte (*J. Power Sources,* 48, 303 (1994)). The results show that the cell has a good initial capacity, however, the capacity cannot be regenerated and restored to the initial state due to incomplete charging. In addition, no definite mention is made regarding its reversibility.

It is well known that sulphate ion (SO₄²⁻) shows considerable effect on the reversibility of the reaction for MnO₂/Mn(II) as well as for Zn/Zn(II). Therefore, it can be determined that the zinc sulphate electrolyte system will give a positive effect on developing rechargeable cells by improving manganese dioxide-zinc cell systems.

However, the use of zinc sulphate electrolyte does not fully guarantee the improvement of reversibility in a manganese dioxide-zinc cell system.

The US Patent No. 4,968,569 explains that the irreversibility encountered in MnO₂/aqueous zinc sulphate solution/zinc cells is caused by an internal short circuit resulting from a dendritic growth of zinc, and suggests replacing the substrate of zinc anode or the surface of the substrate with lead (Pb) or a lead alloy to avoid the internal short circuit.

However, the addition of lead as an additive to zinc electrode of the zinc sulphate electrolyte system did not bring enormous effects.

Such attempts to solve the above mentioned problems by improving the zinc electrode, does not show good experimental results, since even the use of an improved zinc anode shows a capacity decrease ranging between 18% and 39% after 50 cycles of charging and discharging.

Likewise, when an electrolyte consisting of only zinc sulphate is used, the capacity decrease maintains in spite of good initial capacity, as seen from the Shoji et al.'s result. Askar et al. also point out that such electrolyte does not have good reversibility.

As it can be understood from an extensive study, the main reason for irreversibility occurring in the MnO₂/aqueous zinc sulphate solution/zinc rechargeable cell is directly related to the problems of manganese dioxide cathode, particularly to the incomplete charging problem. The main causes of capacity decrease or incomplete charging are primarily the dissolution of manganese, which proceeds in a side reaction with repeated charge and discharge cycles, and the loss of material thereby. In addition, the production of basic zinc sulphate hydrate, ZnSO₄·3Zn(OH)₂·nH₂O, on the surface of the manganese dioxide cathode can be considered another possible reason.

The decrease in cell capacity due to the dissolution of manganese from the manganese oxide cathode material of the cell has been already reported by many researchers and its reaction mechanism has been explained in many ways.

For example, Thackeray et al. report that manganese is dissolved via disproportionation in manganese(III) state (*Solid State Ionics*, 69, 59 (1994)). Jang et al. report that the dissolution of manganese is carried out by side reactions of an electrolyte or a conducting material at high oxidation potential (*J. Electrochem. Soc*., 143, 2204 (1996)).

The zinc sulphate electrolyte used in the present invention is capable of conducting a two-electron reaction between Mn^{(IV)}O₂ and Mn^{(II)}. During the discharging period, manganese dioxide in a solid state is reduced to manganese ion (II) in an aqueous solution state (reaction in which two electrons are involved with regard to one manganese atom). During the charging period, the reverse reaction proceeds. By the way, the electrolyte has very high solubility for manganese ion (II) (>>2M). Additionally, if manganese ion (II) dissolved into the electrolyte during the discharging period is not completely restored to manganese dioxide during the charging period, the loss of cathode material (the decrease of total amount of manganese used as a cathode material) and incomplete charging phenomenon occur, which keep diminishing the capacity for a longer term.

Furthermore, since the discharging reaction consumes a hydrogen ion of the electrolyte, pH increases locally around the surface of manganese dioxide cathode, which may cause the formation of basic zinc sulphate hydrates, ZnSO₄·3Zn(OH)₂·nH₂O. Thus produced basic zinc sulphate hydrates are accumulated around the electrode surface (interface between the electrolyte and electrode), inhibiting charge and mass transfer, which causes the incomplete charging and capacity decline. The above mentioned basic zinc sulphate hydrates are stable in the particular pH range (pH > 2.8). Therefore, as pH of the aqueous solution decreases, the basic zinc sulphate hydrates become unstable, which causes the dissolution of the basic zinc sulphate hydrates or inhibits the production of the basic zinc sulphate hydrates. In order to determine whether or not the basic zinc sulphate hydrates are produced, the basic zinc sulphate hydrates (trihydrate, tetrahydrate, pentahydrate) were synthesised versus the Bear's method (*Aust. J. Chem*., 40, 539 (1987)) and were compared.

In sum, when aqueous zinc sulphate solution is used as an electrolyte for a manganese dioxide-zinc rechargeable cell, the decrease in cell capacity is caused with the repeated charge/discharge cycles due to the following four reasons :
1. the manganese content in the manganese dioxide cathode decreases because of the incomplete charging or other side reactions ;
2. due to the formation of basic zinc sulphate hydrate, the structure of the electrode surface is deteriorated to inhibit the free transfer of charge and mass, which render electrode reaction difficult to proceed ;
3. the internal short circuit occurs due to the dendritic growth or irregular electrodeposition of the zinc anode, and thus the reversibility decreases for a long term ;
4. the electrolyte decomposition and the gas generation are accelerated with the increase of overpotential of the zinc anode.

### Summary of the invention

Now the Applicant has developed electrodes and an electrolyte system, which can solve the problems encountered in the use of zinc and manganese dioxide electrodes. The present system provides long term stability and reversibility of the charge/discharge cycles suitable for the manufacture of manganese dioxide/zinc rechargeable cells. More specifically, the Applicant has surprisingly found, and this constitutes the object of the present invention, that in a rechargeable cell containing a cathode comprised of manganese dioxide; an anode comprised of zinc or a zinc alloy; and an aqueous ZnSO₄ solution as the electrolyte, the addition of an appropriate amount of a Mn(II) salt to the electrolyte and/or the electrodes, and the addition of carbon powder to the zinc anode, inhibits the decrease in cell capacity with repeated charge/discharge cycles and improves the cell reversibility.

It should be understood, however, that the detailed description and specific examples, while indicating preferred embodiments of the present invention are given by way of illustration and not limitation. Many changes and modifications within the scope of the present invention may be made without departing from the spirit thereof, and the invention includes all such modifications.

### Brief description of the drawings

Fig. 1 shows the variation of discharge capacity of manganese dioxide-zinc rechargeable cell produced according to Examples 1 and 2 of the present invention and to the comparative Example 8 versus the cycle number of charge and discharge, at a constant current.
Fig. 2 shows the variation of discharge capacity of manganese dioxide-zinc rechargeable cell produced according to Examples 3, 4, 5, 6 and 7 of the present invention and to the comparative Example 8 versus the cycle number of charge and discharge, at a constant current.
Fig. 3 shows the variation of discharge capacity of MnO₂/Zn rechargeable cell produced according to Examples 9 and 10 of the present invention and to the comparative Example 11 versus the cycle number of charge and discharge, at a constant current.
Fig. 4 shows the variation of the Mn content in manganese dioxide cathode of the MnO₂/Zn rechargeable cell produced according to Example 12 of the present invention and to the comparative Example 13 versus the cycle number of charge and discharge, at a constant current.
Fig. 5 shows the X-ray diffraction (XRD) strength versus the diffraction angle 2θ/(CuKα) for the manganese dioxide cathode of the MnO₂/Zn rechargeable cell produced according to Example 14 of the present invention and to the comparative Example 15 after 10 cycles of charge and discharge, at a constant current.
Fig. 6 shows the variation of discharge capacity of MnO₂/Zn rechargeable cell produced according to Examples 16 and 17 of the present invention versus the cycle number of charge and discharge, at a constant current.
Fig. 7 shows the variation of discharge capacity of MnO₂/Zn rechargeable cell produced according to Examples 18, 19, 20, 21 and 22 of the present invention versus the cycle number of charge and discharge, at a constant current.
Fig. 8 shows the variation of discharge capacity of MnO₂/Zn rechargeable cell produced according to Examples 23 and 24 of the present invention versus the cycle number of charge and discharge, at a constant current.
Fig. 9 shows the variation of discharge capacity of MnO₂/Zn rechargeable cell produced according to Examples 24 and 25 of the present invention versus the cycle number of charge and discharge, at a constant current.

### Detailed description of the invention

The present invention provides a rechargeable cell comprising a cathode, an anode and an electrolyte. The cathode, anode and electrolyte are the primary constitution elements of the present rechargeable cell, but additional constitution elements such as a separator can be included.

According to the present invention manganese dioxide, such as natural manganese dioxide, synthetic manganese dioxide, electrolytic manganese dioxide or all stoichiometric or nonstoichiometric manganese dioxides which can be obtained, can be used as a cathode material. In other words, all the manganese dioxides, which are used or known as the cathode of a cell, may be employed.

According to a preferred embodiment of the present invention the cathode material is a mixture of manganese dioxide in combination with a conducting material having an electronical conductivity and a binder.

The conducting material is preferably added in an amount of from about 3% to about 15% by weight with respect to the total weight of the cathode material. Examples of the conducting material according to the present invention are carbon powders selected from the group consisting of acetylene black, thermal black, furnace black, channel black, graphite and activated carbon. These conducting materials may be used singly or as a mixture of two or more of them. Among them, acetylene black and furnace black are particularly preferred.

In case the amount of the conducting material added is not greater than about 3% by weight with respect to the total weight of the cathode material, the electronical conductivity decreases, resulting in overpotential. In case that the amount of the conducting material is greater than about 15% by weight, the energy density decreases and the side reactions due to the conducting material become severe.

If desired, a binder may be added to the cathode material in an amount not greater than about 15% by weight with respect to the total weight of the cathode material.

As binders, there can be used polymer materials that can maintain or improve the binding force among manganese dioxide, the conducting material and the current collector. According to a particular embodiment of the present invention at least one polymer or one copolymer of more than two polymers selected from the group consisting of polyvinyl alcohol (PVA), polyvinyl chloride (PVC), polyacrylonitrile (PAN), polyethylene oxide (PEO), polytetrafluoroethylene (PTFE), polyvinylidene difluoride (PVdF) and polymethyl methacrylate (PMMA), are added to the cathode material.

When a little amount of binder is added, the binding force of the electrode decreases. When the amount of binder added is greater than about 15% by weight with respect to the total weight of the cathode material, the processability and porosity of the electrode decrease.

According to the present invention the zinc employed as an anode material can be processed in the form of a foil, or as a mixture of metal powder, optionally in combination with an additive and with a binder in a similar way to the cathode material. In order to provide a zinc anode having a wide surface area, the powder form is preferable to the foil one. It is preferred that the purity of zinc metal is high.

It is also possible to use an alloy of zinc with a metal selected for special purpose.

Salts such as zinc sulphate and manganese sulphate and/or carbon powder may be added to the present zinc anode. The salts such as zinc sulphate and manganese sulphate may be used as pore former, leading to the dissolution and electrodeposition of zinc in several places on the surface and in the inner side of the zinc anode. The carbon powder forms a conducting path through the zinc powder increasing its electronic conductivity, and exerts an action as a seed in the course of dissolution and electrodeposition, maintaining an even shape of the zinc anode. According to a preferred embodiment of the present invention the carbon powder is mixed with zinc powder and a binder, so that the carbon powder is dispersed evenly throughout the electrode.

The amount and kinds of binder added to the anode material are generally similar to those of binders added to the cathode material, but the binder may be eliminated or replaced with other materials such as cellulose and a starch depending on the kinds of cell or electrode.

Each cathode material and anode material in a mixture form thus obtained may be pressed to form pellets or subjected to screen printing to form thin films, which are then combined with a current collector. In addition, the present anode material and cathode material may be used as a gel by mixing them with an electrolyte and a gelling agent. The composition of such electrode material mixtures and the manufacturing process may be chosen in view of the shape and characteristics of the cell. The present invention does not compare the advantages and disadvantages of each method and these selective matters do not restrict the intent and scope of the present invention.

As the electrolyte, an aqueous zinc sulphate solution is mainly used, although the electrolyte of the present invention is not limited to it. The water used as the solvent is preferably deionised water, and the zinc sulphate has high purity, preferably has a purity of 99% or more. The concentration of zinc sulphate is preferably ranging between about 0.5 M and about 3 M and, more preferably, between about 1 M and about 2.5 M.

The zinc sulphate electrolyte has the advantages that it can be easily produced and handled, and it is considerably stable when water is used as the solvent. Moreover, zinc sulphate an has excellent conductivity, which in turn improves the characteristics of the cell charge/discharge cycles.

However, when an aqueous zinc sulphate solution is used as an electrolyte of the present MnO₂/Zn rechargeable cell, the capacity decrease becomes severe with the repeated charge/discharge cycles due to the following four reasons.

First, the manganese content in the manganese dioxide cathode decreases because of the incomplete charging or of another side reaction.

Second, the structure of the electrode/electrolyte interface is deteriorated due to the formation of basic zinc sulphate hydrate, causing the inhibition of the free transfer of charge and mass, making the electrode reaction difficult to proceed.

Third, internal short circuits occur or the long term reversibility decreases due to the dendritic growth of the zinc anode and to the irregular electrodeposition on it. Fourth, the electrolyte decomposition and gas generation are accelerated due to the increase of the zinc anode overpotential.

The present invention provides a method to solve the above mentioned problems by adding new suitable compounds to the electrolyte and/or cell electrodes. In other words, the method according to the present invention solves the decrease of manganese content in the manganese dioxide cathode by the addition of at least one manganese salt (II) to the electrolyte and/or the electrodes material.

Besides, the addition of at least one manganese (II) salt increases the acidity of the electrolyte solution, thus inhibiting or removing the production of basic zinc sulphate hydrate, which may destroy the structure of electrode surface.

According to the present invention the manganese (II) salt may be added to any one of the cathode material, anode material or electrolyte, or it may be added to the two selected from them or to all of them.

Furthermore, the addition of carbon powder as the additive for the zinc anode suppresses the zinc anode overpotential, causing the decrease of gas generation, and the even dissolution and electrodeposition of zinc, resulting in an improvement of the zinc anode reversibility.

Examples of manganese (II) salts that can be added to an electrolyte and/or an electrode according to the present invention are the manganese (II) salts selected from the group consisting of MnSO₄, Mn(NO₃)₃, Mn(CO₂CH₃)₂, MnCl₂, MnBr₂ and Mn(ClO₄)₂. These manganese (II) salts may be used singly or as a mixture of two or more of them. Manganese sulphate is the most preferred.

The amount of manganese (II) salt added together with electrode material should be controlled at an appropriate level depending on the electrolyte volume, on the constituents and composition of the electrode and final concentration of manganese (II) salt.

When the manganese (II) salt is added to an electrode material of the present invention, the amount of the manganese (II) salt added is preferably not greater than about 20% by weight with respect to the total weight of electrode, more preferably, it is not greater than about 10% by weight. In case that the amount of manganese (II) salt added exceeds about 20% by weight, there is a risk of losing the binding force of electrodes.

It is moreover desirable that manganese (II) salt has higher purity. When manganese (II) salt is directly added to an electrolyte of the present invention, the concentration of manganese (II) salt is preferably not higher than about 2 M and at the same time not more than that of zinc sulphate and, more preferably, not higher than about 0.5 M.

When an electrode is prepared by adding a part or all of manganese (II) salt to an electrode material, the electrode thus prepared showed little different results, if compared to the case wherein the manganese (II) salt is directly added to an electrolyte. This is because the manganese (II) salt is dissolved into an electrolyte from the electrode material. Therefore, in the following, it is considered that the method wherein manganese (II) salt is directly added to an electrolyte is the same as the method wherein manganese (II) salt is mixed with an electrode material and then dissolved into an electrolyte from the electrode material. In such a case, the concentration of manganese (II) salt in an electrolyte is regarded as the value that we have if all of the manganese (II) salt added to the electrode is dissolved from the electrode.

When manganese sulphate is utilised as a manganese salt, the variation of pH and ionic conductivity of the aqueous electrolyte solution in accordance with the variation of the concentration of zinc sulphate and manganese sulphate are collectively summarised in the Table 1 reported below.

As it can be seen from the table 1, the pH of the aqueous electrolyte solution decreases drastically and the ionic conductivity decreases gradually, as manganese sulphate is added to the aqueous zinc sulphate 2 M solution.

However, the ionic conductivity decreases to an extent that it may be sufficiently utilised as an electrolyte of rechargeable cell.

On the other hand, the decrease of the pH of the aqueous electrolyte solution may inhibit or remove the formation of basic zinc sulphate hydrates, which may destroy the surface structure of electrode.

**TABLE 1**

| The changes of pH and ionic conductivity of the aqueous electrolyte solution versus the change of the concentration of zinc sulphate and manganese sulphate | | | |
|---|---|---|---|
| Concentration (M) | | pH | Ionic conductivity at room temperature (mS/cm) |
| Zinc sulphate | Manganese sulphate | | |
| 1 | 0 | 5.02 | 43.8 |
| 2 | 0 | 4.32 | 50.5 |
| 2 | 0.1 | 3.06 | 50.0 |
| 2 | 0.2 | 2.74 | 49.4 |
| 2 | 0.5 | 2.31 | 47.0 |
| 2 | 1.0 | 1.94 | 41.5 |
| 2 | 2.0 | 1.48 | 26.4 |

Some part of the desirable effect obtainable with the cell of the present invention may be reached only by adding at least one manganese (II) salt into the cathode material, anode material and/or the electrolyte. However, more preferably, the effect of the present invention may be obtained by adding carbon powder to the zinc anode and at least one manganese (II) salt to the electrolyte and/or to the electrodes.

According to a particular enbodiment of the present invention, the carbon powder to be added to the zinc anode is selected from the group consisting of acetylene black, thermal black, furnace black, channel black, graphite and activated carbon.

Acetylene black and thermal black are obtained by pyrolysis of acetylene without the supply of oxygen in a closed chamber, and thus have small surface area, large density and little surface functional groups. Furnace black is obtained by decomposing hydrocarbons in the presence of oxygen and has, in general, large surface area, small density and much surface functional groups. Like furnace black, channel black is also obtained via incomplete combustion. According to the present invention furnace black and carbon black having a large surface area are preferably added to the zinc anode.

The content of carbon powder added to zinc anode is preferably not greater than 15% by weight with respect to the total weight of the anode material and, more preferably, not greater than 10%. When the content of carbon powder added exceeds 15% or more, the energy density decreases and other adverse effect may be caused, due to the several side reactions on the surface of carbon.

It is very important that carbon powder is mixed with the zinc powder and optionally with the binder, to be evenly dispersed throughout the electrode. The method for mixing may be suitably selected depending on the physicochemical properties of constituents, on the shape of electrodes and the desired electrode characteristics.

According to the present invention carbon powder may be added to manganese dioxide cathode too ; however, in such a case, it is employed as a conducting material to complement the demerit of the low electronic conductivity encountered with manganese dioxide.

The present invention is described in more detail by referring to examples without limiting it in any way. In particular, the examples demonstrate the fabrication of cell by using aqueous zinc sulphate solution electrolyte according to the present invention and charging/discharging experimental results.

### Manufacture of manganese dioxide/aqueous zinc sulphate solution/zinc rechargeable cells and charge/discharge cycles experiments

### EXAMPLE 1

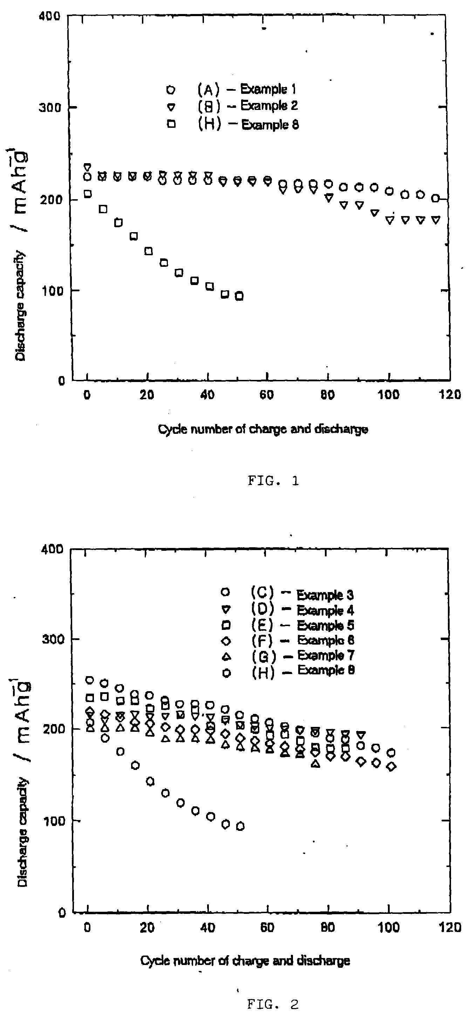

The electrolytic manganese dioxide as a cathode material, acetylene black as a conducting material (surface area of 64 m²/g) and PTFE (polytetrafluoroethylene) as a binder were mixed in a weight ratio of 20: 4: 1. Then the mixture was dispersed in isopropanol to form a paste. The paste was applied onto a stainless steel grid, followed by pressing and drying in air at room temperature to form a cathode. Separately, zinc metal powder (325 mesh, 99.5%), acetylene black additive (surface are of 64 m²/g) and PTFE were mixed in a weight ratio of 200: 2: 1, and then an anode was prepared in a similar way to the cathode. Zinc sulphate (99.7%) was dissolved in deionised water in a concentration of 2 M, in which manganese sulphate (99.3%) was dissolved in a concentration of 0.5 M. The resulting solution was utilised as an electrolyte. After discharging was carried out at a constant current of 0.4 C to a voltage of 1.0 V (*vs*. Zn/Zn²⁺), charging was carried out at the same rate to a voltage of 1.9 V (*vs*. Zn/Zn²⁺). This serial operation of discharge-charge was defined as one cycle. The changes of discharge capacity versus the cycle number of charging/discharging are depicted as (A) in Fig. 1. It can be understood that the discharge capacity was not substantially lowered with the charging/discharging cycles.

### EXAMPLE 2

A manganese dioxide cathode was manufactured in the same manner as in Example 1. Zinc metal powder (325 mesh, 99.5%), manganese sulphate (99.3%), acetylene black additive (surface area of 64 m²/g) and PTFE were mixed in a weight ratio of 200: 20: 2: 1 and then an anode was manufactured in the same manner as the cathode. Zinc sulphate (99.7%) was dissolved in deionised water in a concentration of 2 M, and the resulting solution was utilised as an electrolyte.

The final concentration of manganese sulphate was adjusted to approximately 0.1 M. The charging/discharging operation was carried out at a constant current in the same manner as in Example 1. The changes of discharge capacity versus the cycle number of charging/discharging are depicted as (B) in Fig. 1. It can be understood that the discharge capacity was not substantially lowered with the charging/discharging cycles.

### EXAMPLE 3

A manganese dioxide cathode and a zinc anode were manufactured in the same manner as in Example 1. Zinc sulphate (99.7%) was dissolved in deionised water in a concentration of 2 M, in which manganese nitrate (99.9%) was dissolved in a concentration of 0.1 M. The resulting solution was utilised as an electrolyte. The charging/discharging operation was carried out at a constant current in the same manner as in Example 1. The changes of discharge capacity versus the cycle number of charging/discharging are shown as (C) in Fig. 2. It can be understood that the discharge capacity was not much lowered with the charging/discharging cycles.

### EXAMPLE 4

A manganese dioxide cathode and a zinc anode were manufactured in the same manner as in Example 1. Zinc sulphate (99.7%) was dissolved in deionised water in a concentration of 2 M, in which manganese acetate (99.5%) was dissolved in a concentration of 0.1 M. The resulting solution was utilised as an electrolyte. The charging/discharging operation was carried out at a constant current in the same manner as in Example 1. The changes of discharge capacity versus the cycle number of charging/discharging are shown as (D) in Fig. 2. It can be understood that the discharge capacity was not much lowered with the charging/discharging cycles.

### EXAMPLE 5

A manganese dioxide cathode and a zinc anode were manufactured in the same manner as in Example 1. Zinc sulphate (99.7%) was dissolved in deionised water in a concentration of 2 M, in which manganese chloride (99%) was dissolved in a concentration of 0.1 M. The resulting solution was utilised as an electrolyte. The charging/discharging operation was carried out at a constant current in the same manner as in Example 1. The changes of discharge capacity versus the cycle number of charging/discharging are shown as (E) in Fig. 2. It can be understood that the discharge capacity was not much lowered with the charging/discharging cycles.

### EXAMPLE 6

A manganese dioxide cathode and a zinc anode were manufactured in the same manner as in Example 1. Zinc sulphate (99.7%) was dissolved in deionised water in a concentration of 2 M, in which manganese bromide (99%) was dissolved in a concentration of 0.1 M. The resulting solution was utilised as an electrolyte. The charging/discharging operation was carried out at a constant current in the same manner as in Example 1. The changes of discharge capacity versus the cycle number of charging/discharging are shown as (F) in Fig. 2. It can be understood that the discharge capacity was not greatly lowered with the charging/discharging cycles.

### EXAMPLE 7

A manganese dioxide cathode and a zinc anode were manufactured in the same manner as in Example 1. Zinc sulphate (99.7%) was dissolved in deionised water in a concentration of 2 M, in which manganese perchlorate (99%) was dissolved in a concentration of 0.1 M. The resulting solution was utilised as an electrolyte. The charging/discharging operation was carried out at a constant current in the same manner as in Example 1. The changes of discharge capacity versus the cycle number of charging/discharging are shown as (G) in Fig. 2. It can be understood that the discharge capacity was not greatly lowered with the charging/discharging cycles.

### EXAMPLE 8 (Comparative to Examples 1 to 7)

A manganese dioxide cathode and a zinc anode were manufactured in the same manner as in Example 1. Zinc sulphate (99.7%) was dissolved in deionised water in a concentration of 2 M. The resulting solution was utilised as an electrolyte. This example was carried out in the same manner as in Examples 1 to 7 except that manganese (II) salt was not added to the electrolyte or electrode material. The charging/discharging operation was carried out at a constant current in the same manner as in Examples 1 to 7. The changes of discharge capacity versus the cycle number of charging/discharging are shown as (H) in Fig. 1 and 2. It was found that the discharge capacity was drastically lowered during the initial several cycles of charging/discharging when manganese (II) salt was not added.

### EXAMPLE 9

The synthetic manganese dioxide as a cathode material, acetylene black as a conducting material (surface area of 64 m²/g) and PTFE (polytetrafluoroethylene) as a binder were mixed in a weight ratio of 20: 4: 1. Then the mixture was dispersed in isopropanol to form a paste. The paste was applied onto a stainless steel grid, followed by pressing and drying in air at room temperature to form a cathode. Separately, zinc metal powder (325 mesh, 99.5%), acetylene black additive (surface are of 64 m²/g) and PTFE were mixed in a weight ratio of 200: 2: 1, and then an anode was manufactured in a similar way to the cathode. Zinc sulphate (99.7%) was dissolved in deionised water in a concentration of 2 M, in which manganese sulphate (99.3%) was dissolved in a concentration of 0.5 M.

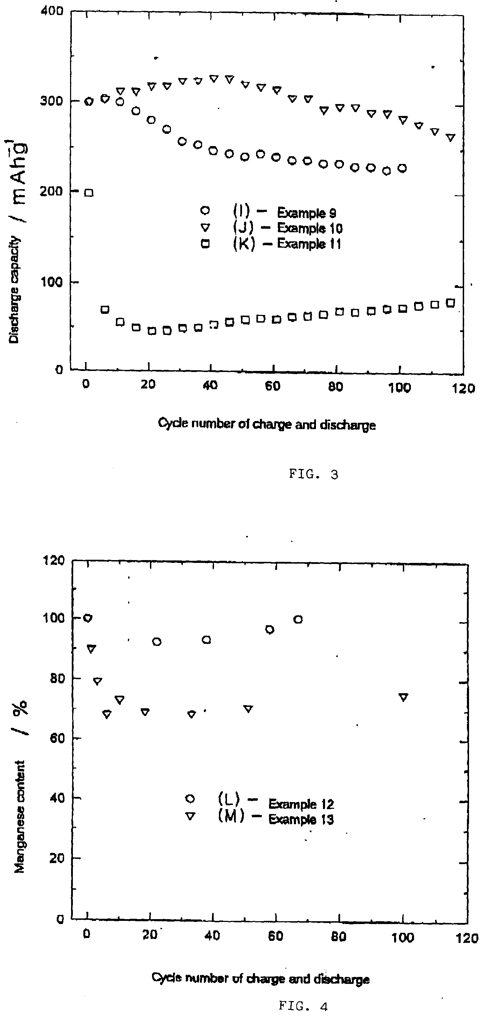

The resulting solution was utilised as an electrolyte. After discharging was carried out at a constant current of 0.4 C to a voltage of 1.0 V (*vs*. Zn/Zn²⁺), charging was carried out at the same rate to a voltage of 1.9 V (*vs.* Zn/Zn²⁺). This serial operation of discharge-charge was defined as one cycle. The changes of discharge capacity versus the cycle number of charging/discharging are shown as (I) in Fig. 3. It can be understood that the decrease of discharge capacity was considerably suppressed.

### EXAMPLE 10

A manganese dioxide cathode and a zinc anode were manufactured in the same manner as in Example 9. Zinc sulphate (99.7%) was dissolved in deionised water in a concentration of 2 M, in which manganese sulphate (99.3%) was dissolved in a concentration of 0.1 M. The resulting solution was utilised as an electrolyte. The charging/discharging operation was carried out at a constant current in the same manner as in Example 9. The changes of discharge capacity versus the cycle number of charging/discharging are shown as (J) in Fig. 3. It can be understood that the discharge capacity was not substantially lowered with the charging/discharging cycles.

### EXAMPLE 11 (Comparative to Examples 9 and 10)

A manganese dioxide cathode and a zinc anode were manufactured in the same manner as in Example 9. Zinc sulphate (99.7%) was dissolved in deionised water in a concentration of 2 M. The resulting solution was utilised as an electrolyte. This example was carried out in the same manner as in Examples 9 and 10 except that manganese (II) salt was not added to the electrolyte. The charging/discharging operation was carried out at a constant current in the same manner as in Examples 9 and 10. The changes of discharge capacity versus the cycle number of charging/discharging are shown as (K) in Fig. 3. It was found that the discharging capacity was drastically lowered during the initial several cycles of charging/discharging when manganese (II) salt was not added.

### EXAMPLE 12

A cell was manufactured and then the charging/discharging operation was carried out in the same manner as in Example 10. After the repetition of random cycles of charging/discharging, the manganese dioxide cathode was dismounted and subjected to an exam of the content of the manganese element in the electrode.

The changes of manganese content versus the cycle number of charging/discharging based on the initial manganese content (100%) are shown as (L) in Fig. 4. It was found that the manganese content was not substantially lowered with the charging/discharging cycles.

### EXAMPLE 13 (Comparative to Example 12)

A cell was manufactured and then the charging/discharging operation was carried out in the same manner as in Example 11. After the repetition of random cycles of charging/discharging, the manganese dioxide cathode was dismounted and subjected to an exam of the content of the manganese element in the electrode.

The changes of manganese content versus the cycle number of charging/discharging based on the initial manganese content (100%) are shown as (M) in Fig. 4. It was found that the manganese content was drastically lowered during the initial several cycles of charging/discharging when manganese (II) salt was not added.

### EXAMPLE 14

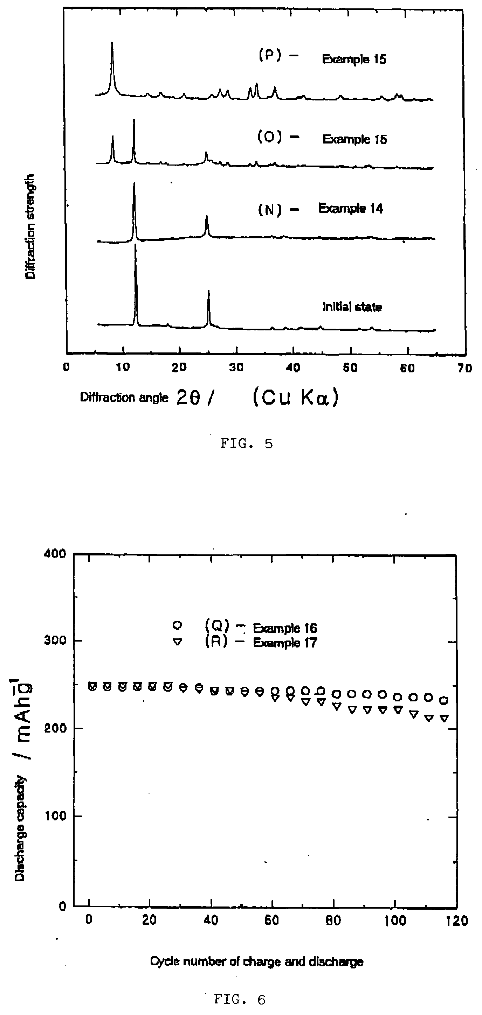

A cell was manufactured and then the charging/discharging operation was carried out in the same manner as in Example 9. After the repetition of 10 cycles of charging/discharging, the cell was dismantled and the manganese dioxide cathode was dismounted. The manganese dioxide cathode was subjected to X-ray diffraction analysis to compare the crystal structure of the manganese dioxide cathode with that of at the initial state. The results of the crystal structure of manganese dioxide cathode after 10 cycles of charging/discharging are shown as (N) in Fig. 5.

As it can be seen from the Figure 5, the manganese dioxide cathode maintained completely its initial crystal structure after 10 cycles of charging/discharging and the basic zinc sulphate hydrate was barely found.

### EXAMPLE 15 (Comparative to Example 14)

A cell was manufactured and then the charging/discharging operation was carried out in the same manner as in Example 11. After the repetition of 10 cycles of charging/discharging, the cell was dismantled and the manganese dioxide cathode is dismounted. The manganese dioxide cathode was subjected to X-ray diffraction analysis to compare the crystal structure of manganese dioxide cathode with that of at the initial state. The results of the crystal structure of manganese dioxide cathode after 10 cycles of charging/discharging are shown as (O) in Fig. 5.

It was found a large amount of the basic zinc sulphate tetrahydrate, ZnSO₄·3Zn(OH)₂·4H₂O after 10 cycles of charging/discharging. In order to compare in more detail, the basic zinc sulphate hydrates such as trihydrate. tetrahydrate and pentahydrate were synthesized versus the method of Bear et al., and subjected to X-ray diffraction analysis. The results are shown as (P) in Fig. 5.

As it can be seen by comparing the graph (O) with that of the initial state in the Figure 5, the manganese dioxide cathode maintained only partially its initial crystal structure after 10 cycles of charging/discharging, whereas the comparison between (P) and (O) indicates that a great amount of the basic zinc sulphate tetrahydrate was formed after 10 cycles of charging/discharging.

### EXAMPLE 16

The electrolytic manganese dioxide as a cathode material, acetylene black as a conducting material (surface area of 64 m²/g) and PTFE (polytetrafluoroethylene) as a binder were mixed in a weight ratio of 20: 4: 1. Then the mixture was dispersed in isopropanol to form a paste. The paste was spread on a stainless steel grid, followed by pressing and drying in air at room temperature to form a cathode. Separately, zinc metal powder (325 mesh, 99.5%), furnace black additive (surface area of 1350 m²/g) and PTFE were mixed in a weight ratio of 200: 2: 1, and then an anode was manufactured in the same manner as the cathode. Zinc sulphate (99.7%) was dissolved in deionised water in a concentration of 2 M, in which manganese sulphate (99.3%) was dissolved in a concentration of 0.5 M.

The resulting solution was utilised as an electrolyte. After discharging was carried out at a constant current of 0.4 C to a voltage of 1.0 V (*vs.* Zn/Zn²⁺), charging was carried out at the same rate to a voltage of 1.9 V (*vs.* Zn/Zn²⁺). This serial operation of discharge-charge was defined as one cycle. This example was carried out in the same manner as in Example 1 except that furnace black was used as the additive to the zinc anode. The changes of discharge capacity versus the cycle number of charging/discharging are shown as (Q) in Fig. 6. It was found that the decrease of discharge capacity is more prevented than in Example 1.

### EXAMPLE 17

A manganese dioxide cathode was manufactured in the same manner as in Example 16. Separately, zinc metal powder (325 mesh, 99.5%), manganese sulphate (99.3%), furnace black additive (surfaces are of 1350 m²/g) and PTFE were mixed in a weight ratio of 200: 20: 2: 1 and then an anode was manufactured in the same manner as in a cathode. Zinc sulphate (99.7%) was dissolved in deionised water in a concentration of 2 M, and the resulting solution was utilised as an electrolyte. The final concentration of manganese sulphate was adjusted to about 0.1 M. The charging/discharging operation was carried out at a constant current in the same manner as in Example 16. This example was carried out in the same manner as in Example 2 except that furnace black was used as the additive in zinc anode. The changes of discharge capacity versus the cycle number of charging/discharging are shown as (R) in Fig. 6. It was found that the decrease of discharge capacity is more prevented than in Example 2.

### EXAMPLE 18

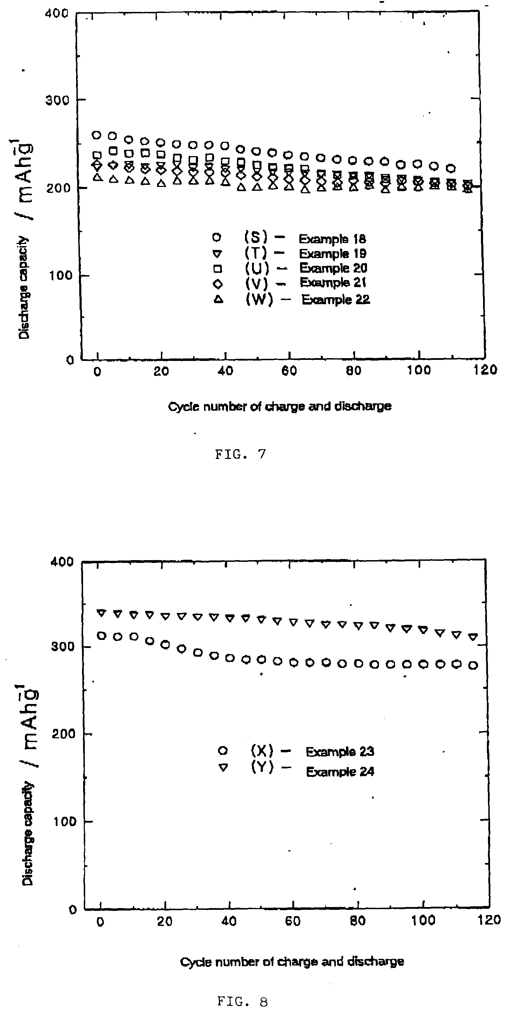

A manganese dioxide cathode and a zinc anode were manufactured in the same manner as in Example 16. Zinc sulphate (99.7%) was dissolved in deionised water in a concentration of 2 M, in which manganese nitrate (99.9%) was dissolved in a concentration of 0.1 M. The resulting solution was utilised as an electrolyte. The charging/discharging operation was carried out at a constant current in the same manner as in Example 16. This example was carried out in the same manner as in Example 3 except that furnace black was used as the additive in zinc anode. The changes of discharge capacity versus the cycle number of charging/discharging are shown as (S) in Fig. 7. It was found that the decrease of discharge capacity is more prevented than in Example 3.

### EXAMPLE 19

A manganese dioxide cathode and a zinc anode were manufactured in the same manner as in Example 16. Zinc sulphate (99.7%) was dissolved in deionized water in a concentration of 2 M, in which manganese acetate (99.5%) was dissolved in a concentration of 0.1 M. The resulting solution was utilized as an electrolyte. The charging/discharging operation was carried out at a constant current in the same manner as in Example 16. This example was carried out in the same manner as in Example 4 except that furnace black was used as the zinc anode additive. The changes of discharge capacity versus the cycle number of charging/discharging are depicted as (T) in Fig. 7. It was found that the decrease of discharge capacity is more prevented than in Example 4.

### EXAMPLE 20

A manganese dioxide cathode and a zinc anode were manufactured in the same manner as in Example 16. Zinc sulphate (99.7%) was dissolved in deionised water in a concentration of 2 M, in which manganese chloride (99%) was dissolved in a concentration of 0.1 M. The resulting solution was utilised as an electrolyte. The charging/discharging operation was carried out at a constant current in the same manner as in Example 16. This example was carried out in the same manner as in Example 5 except that furnace black was used as the additive in zinc anode. The changes of discharge capacity versus the cycle number of charging/discharging are shown as (U) in Fig. 7. It was found that the decrease of discharge capacity is more prevented than in Example 5.

### EXAMPLE 21

A manganese dioxide cathode and a zinc anode were manufactured in the same manner as in Example 16. Zinc sulphate (99.7%) was dissolved in deionised water in a concentration of 2 M, in which manganese bromide (99%) was dissolved in a concentration of 0.1 M. The resulting solution was utilised as an electrolyte. The charging/discharging operation was carried out at a constant current in the same manner as in Example 16. This example was carried out in the same manner as in Example 6 except that furnace black was used as the zinc anode additive. The changes of discharge capacity versus the cycle number of charging/discharging are shown as (V) in Fig. 7. It was found that the decrease of discharge capacity is more prevented than in Example 6.

### EXAMPLE 22

A manganese dioxide cathode and a zinc anode were manufactured in the same manner as in Example 16. Zinc sulphate (99.7%) was dissolved in deionised water in a concentration of 2 M, in which manganese perchlorate (99%) was dissolved in a concentration of 0.1 M. The resulting solution was utilised as an electrolyte. The charging/discharging operation was carried out at a constant current in the same manner as in Example 16. This example was carried out in the same manner as in Example 7 except that furnace black was used as the zinc anode additive. The changes of discharge capacity versus the cycle number of charging/discharging are shown as (W) in Fig. 7. It was found that the decrease of discharge capacity is more prevented than in Example 7.

### EXAMPLE 23

The synthetic manganese dioxide as a cathode material, acetylene black as a conducting material (surface area of 64 m²/g) and PTFE (polytetrafluoroethylene) as a binder were mixed in a weight ratio of 20: 4: 1. Then the mixture was dispersed in isopropanol to form a paste. The paste was spread on a stainless steel grid, followed by pressing and drying in air at room temperature to form a cathode. Separately, zinc metal powder (325 mesh, 99.5%), furnace black additive (surface area of 1350 m²/g) and PTFE were mixed in a weight ratio of 200: 2: 1, and then an anode was manufactured in the same manner as the cathode. Zinc sulphate (99.7%) was dissolved in deionised water in a concentration of 2 M, in which manganese sulphate (99.3%) was dissolved in a concentration of 0.5 M.

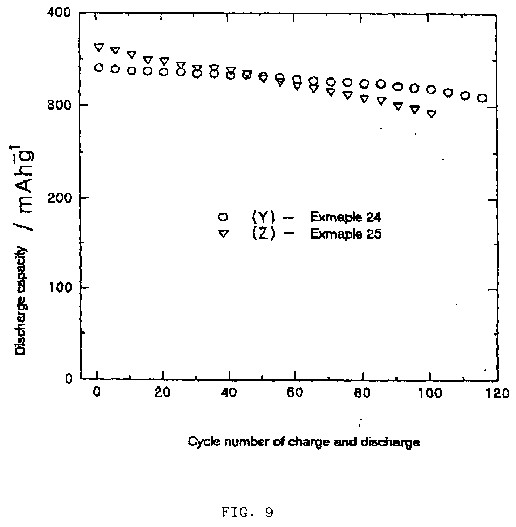

The resulting solution was utilised as an electrolyte. After discharging was carried out at a constant current of 0.4 C to a voltage of 1.0 V (*vs*. Zn/Zn²⁺), charging was carried out at the same rate to a voltage of 1.9 V (*vs*. Zn/Zn²⁺). This serial operation of discharge-charge was defined as one cycle. This example was carried out in the same manner as in Example 9 except that furnace black was used as the Zinc anode additive. The changes of discharge capacity versus the cycle number of charging/discharging are shown as (X) in Fig. 8. It was found that the decrease of discharge capacity is more prevented than in Example 9.

### EXAMPLE 24

A manganese dioxide cathode and a zinc anode were manufactured in the same manner as in Example 23. Zinc sulphate (99.7%) was dissolved in deionised water in a concentration of 2 M, in which manganese sulphate (99.3%) was dissolved in a concentration of 0.1 M. The resulting solution was utilised as an electrolyte. The charging/discharging operation was carried out at a constant current in the same manner as in Example 23. This example was carried out in the same manner as in Example 10 except that furnace black was used as the zinc anode additive. The changes of discharge capacity versus the cycle number of charging/discharging are shown as (Y) in Fig. 8 and Fig. 9. It was found that the decrease of discharge capacity is more prevented than in Example 10.

### EXAMPLE 25

The synthetic manganese dioxide as a cathode material, furnace black as a conducting material (surface area of 1350 m²/g) and PTFE (polytetrafluoroethylene) as a binder were mixed in a weight ratio of 20: 4: 1. Then the mixture was dispersed in isopropanol to form a paste. The paste was spread on a stainless steel grid, followed by pressing and drying in air at room temperature to form a cathode. A zinc anode and electrolyte were prepared in the same manner as in Example 24. Then the charge/discharge operation was carried out at a constant current in the same manner as in Example 24. This Example was carried out in the same manner as in Example 24 except that furnace black was used as the zinc anode additive. The changes of discharge capacity versus the cycle number of charging/discharging are shown as (Z) in Fig. 9. It was found that the discharge capacity is slightly lowered with respect to the discharge capacity in Example 24.

As seen from the charging/discharging experimental results concerning the cells prepared in the above examples according to the present invention, the addition of a manganese (II) salt can suppress the capacity decrease with the repeated charge/discharge cycles, as illustrated in Figs. 1, 2 and 3. The addition of a manganese (II) salt can solve the two problems that lead to capacity loss, as illustrated in Fig. 4 and Fig. 5:
i) The manganese content in the manganese dioxide cathode decreases due to the incomplete charging or to other side reactions, and
ii) The surface structure of the electrode is deteriorated due to the formation of the basic zinc sulphate hydrate, which hinders the free transfer of charge and mass, making the electrode reaction difficult to proceed.

Furthermore, as it can be seen from Figs. 6, 7 and 8, the addition of carbon powder into the zinc anode can suppress the increase of overpotential of the zinc anode. This thereby decreases the gas generation, and produces an even electrodeposition and dissolution of zinc, resulting in the improvement of the zinc anode reversibility. Namely, the addition of a carbon powder additive into the zinc anode can solve two causes of the capacity decrease:
i) The dendritic growth and the irregular electrodeposition of the zinc anode may cause the internal short circuit or the decline of the long term reversibility, and
ii) The increase of overpotential of the zinc anode may accelerate the electrolyte decomposition and the gas generation.

In addition, as it can be seen from Fig. 9, it was found that the addition of appropriate carbon black as a conducting material into the manganese dioxide cathode could significantly prevent the decrease in cell capacity.

In sum, it can be understood from the above results that the manganese dioxide/aqueous zinc sulphate solution/zinc cell, wherein at least one manganese (II) salt is added to the electrode material and/or electrolyte and carbon powder is added to the zinc anode, has excellent capacity and reversibility as a rechargeable cell.

## Claims

1. A rechargeable cell comprising
• a cathode,
• an anode, and
• an electrolytic solution,
wherein said cathode comprises manganese dioxide, said anode comprises zinc or a zinc alloy, said electrolytic solution comprises an aqueous zinc sulphate solution, characterised in that at least one manganese (II) salt is added to at least one of said cathode, anode and electrolytic solution, and carbon powder is added to said anode.

2. The rechargeable cell according to claim 1, wherein said cathode further comprises at least one electrically conducting material and at least one binder.

3. The rechargeable cell according to claim 1, wherein said anode further comprises at least one additive and at least one binder.

4. The rechargeable cell according to claim 2, wherein said electrically conducting material is selected from the group consisting of acetylene black, thermal black, furnace black, channel black, graphite, activated carbon and mixtures thereof.

5. The rechargeable cell according to claim 4, wherein said electrically conducting material is selected from the group consisting of acetylene black and furnace black.

6. The rechargeable cell according to claim 2, wherein said electrically conducting material is added to said cathode in an amount ranging from about 3% to about 15% by weight with respect to the total weight of the cathode.

7. The rechargeable cell according to claim 3, wherein said additive is selected from the group consisting of zinc sulphate and manganese sulphate.

8. The rechargeable cell according to any of claims 2 and 3, wherein said binder is a polymer or a copolymer between more than two polymers, selected from the group consisting of polyvinyl alcohol, polyvinyl chloride, polyacrylonitrile, polyethylene oxide, polytetrafluoroethylene, polyvinylidene difluoride and polymethyl methacrylate.

9. The rechargeable cell according to any of claims 2 and 3, wherein said binder is added to said cathode or said anode in an amount not greater than about 15% by weight with respect to the total weight of the cathode or the anode.

10. The rechargeable cell according to claim 1, wherein the concentration of said aqueous zinc sulphate solution ranges between 0.5 M and 3 M.

11. The rechargeable cell according to claim 10, wherein the concentration of said aqueous zinc sulphate solution ranges between 1 M and 2.5 M.

12. The rechargeable cell according to claim 1, wherein said zinc sulphate has a purity higher than 99%.

13. The rechargeable cell according to claim 1, wherein said manganese (II) salt is selected from the group consisting of MnSO₄, Mn(NO₃)₃, Mn(CO₂CH₃)₂, MnCl₂, MnBr₂ and Mn(ClO₄)₂.

14. The rechargeable cell according to claim 13, wherein said manganese (II) salt is MnSO₄.

15. The rechargeable cell according to claim 1, wherein said manganese (II) salt is added to said cathode and/or to said anode in an amount not greater than 20% by weight with respect to the total weight of said cathode or anode, and the concentration of said manganese (II) salt added to said electrolyte solution is not greater than about 2 M and, at the same time, is not greater than the concentration of the zinc sulphate.

16. The rechargeable cell according to claim 15, wherein said manganese (II) salt is added to said cathode and/or to said anode in an amount not greater than 10% by weight with respect to the total weight of said cathode or anode, and the concentration of said manganese (II) salt added to said electrolyte solution is not greater than about 0.5 M.

17. The rechargeable cell according to claim 1, wherein said carbon powder added to said anode is selected from the group consisting of acetylene black, furnace black, channel black, graphite and activated carbon.

18. The rechargeable cell according to claim 17, wherein said carbon powder is furnace black.

19. The rechargeable cell according to claim 1, wherein said carbon powder is added to said anode in an amount not greater than about 15% by weight with respect to the total weight of the anode.

20. The rechargeable cell according to claim 19, wherein said carbon powder is added to said anode in an amount not greater than about 10% by weight with respect to the total weight of the anode.

21. The rechargeable cell according to claim 1, wherein said anode is comprised of zinc processed in the form of a foil or as a powder.

22. The rechargeable cell according to claim 21, wherein said anode is comprised of zinc in a powder form.

23. The rechargeable cell according to claim 1, wherein said anode is a mixture of zinc in a powder form, carbon powder and at least one binder.

24. The rechargeable cell according to claim 1, wherein said cathode is a mixture of manganese dioxide with at least one electrically conducting material and at least one binder, said anode is a mixture of zinc powder with carbon powder and at least one binder, and said electrolytic solution is a solution of zinc sulphate and MnSO₄.

25. The rechargeable cell according to claim 1, wherein said cathode and said anode are processed in a form selected from the group consisting of pellets, thin films and gels.
